# EUROPÄISCHE PATENTSCHRIFT

(11) **EP 4 078 287 B1**
(45) Veröffentlichungstag und Bekanntmachung des Hinweises auf die Patenterteilung: **25.06.2025**
(21) Anmeldenummer: 20833760.0
(22) Anmeldetag: 15.12.2020
(51) Int. Cl.: F21V 7/18, G03B 15/06

(54) **REFLEKTORSCHIRM MIT GERAFFTEM REFLEXIONSELEMENT SOWIE REFLEKTORANORDNUNG MIT EINEM SOLCHEN REFLEKTORSCHIRM**
REFLECTOR UMBRELLA WITH GATHERED REFLECTIVE ELEMENT, AND REFLECTOR ASSEMBLY COMPRISING SUCH A REFLECTOR UMBRELLA
ÉCRAN RÉFLECTEUR AVEC ÉLÉMENT DE RÉFLEXION FRONCÉ ET AGENCEMENT RÉFLECTEUR COMPRENANT UN TEL ÉCRAN RÉFLECTEUR

(30) Priorität: 20.12.2019 DE 102019135536
(43) Veröffentlichungstag der Anmeldung: 26.10.2022
(73) Patentinhaber: Briese, Hans-Werner Friedrich, 22303 Hamburg (DE)
(72) Erfinder: Briese, Hans-Werner Friedrich, 22303 Hamburg (DE)
(74) Vertreter: Stork Bamberger Patentanwälte PartmbB
(86) Internationale Anmeldenummer: PCT/EP2020/086125
(87) Internationale Veröffentlichungsnummer: WO 2021/122532

(56) Entgegenhaltungen:
- EP-A1- 2 535 639
- US-A1- 2002 075 666
- US-A1- 2004 057 244
- US-A1- 2010 188 752
- US-A1- 2017 248 834

## Beschreibung

Die Erfindung betrifft einen faltbaren Reflektorschirm, umfassend ein flexibles, tuchartiges Reflexionselement mit einer außenliegenden Stütz- und Spannstruktur, die mehrere Spannspeichen umfasst, die vorzugsweise gleichmäßig über den Umfang verteilt angeordnet sind und das Reflexionselement in eine im Wesentlichen der Anzahl der Spannspeichen entsprechende Anzahl von Schirmsegmenten einteilen, wobei das aus der Anzahl von Schirmsegmenten bestehende Reflexionselement in aufgespanntem Zustand des Reflektorschirms einen im Wesentlichen rotationssymmetrischen Körper mit einer Lichtaustrittsöffnung bildet.

Die Erfindung betrifft des Weiteren eine Reflektoranordnung, umfassend einen Reflektorschirm sowie ein Trägerelement mit mindestens einem Leuchtmittel.

Solche Reflektorschirme und Reflektoranordnungen kommen insbesondere im Bereich der Fotografie und/oder des Films zum Einsatz. Gerade im Bereich von Foto und Film müssen die Reflektorschirme zu Zwecken des Transports und des Aufbaus am Foto-/Filmset leicht handhabbar sein, weshalb die mobilen Reflektorschirme einerseits leicht sind und andererseits in zusammengefaltetem Zustand ein geringes Volumen aufweisen, so dass die Reflektorschirme erst am Einsatzort zu der vollen Größe und endgültigen Form aufgespannt werden. Mittels der selbsttragende Stütz- und Spannstruktur, die z.B. auf dem Kniehebelprinzip beruht, hält sich der Reflektorschirm ohne zusätzliche Hilfsmittel in der endgültigen, aufgespannten Form. In der endgültigen, aufgespannten Form des Reflektorschirms weist dieser als rotationssymmetrischer Körper im weitesten Sinne ein Kegelform auf. Die Spannspeichen verlaufen ausgehend von einem gedachten Scheitelpunkt des rotationssymmetrischen Körpers gleichmäßig und strahlenförmig in Richtung der Lichtaustrittsöffnung. Über den Umfang verteilt weisen die Spannspeichen vorzugsweise einen gleichen Abstand zueinander auf. Zwischen zwei Spannspeichen ist jeweils ein Schirmsegment ausgebildet, das sich ebenfalls vom gedachten Scheitelpunkt bis zur Lichtaustrittsöffnung erstreckt und in Richtung der Lichtaustrittsöffnung breiter wird.

Der rotationssymmetrische Körper weist in einem die Rotationsachse des Reflektorschirms enthaltenen Schnitt beispielsweise die Form einer Ellipse und/oder einer Parabel und/oder eines Kreises und/oder einer Hyperbel auf. Der Querschnitt kann ausgehend vom Scheitelpunkt in Richtung der Lichtaustrittsöffnung gleich sein. Der Querschnitt kann aber auch variieren, beispielsweise in der Form, dass ein im Schnitt ellipsenförmiger Abschnitt des Reflexionselementes ausgehend vom Scheitelpunkt in Richtung der Lichtaustrittsöffnung hinter einem im Schnitt parabelförmigen Abschnitt des Reflexionselementes liegt. Andere Querschnittformen und Kombinationen von Querschnittformen sind für einen Reflektorschirm aber ebenfalls üblich.

Mittels der Reflektorschirme werden - im Zusammenhang mit Leuchtmitteln - vorzugsweise unterschiedliche Licht- und/oder Schatteneffekte und -bilder, also unterschiedliche Bildcharakteristika erzeugt bzw. gestaltet. Das von dem oder jedem Leuchtmittel emittierte Licht trifft auf das Reflexionselement und wird von diesem reflektiert. Das tuchartige Reflexionselement weist eine Außenfläche und eine die Reflexion erzeugende Innenfläche auf. Die Außenfläche kann nahezu beliebig ausgebildet und gestaltet sein. Die Innenfläche weist eine reflektierende Schicht auf, bildet also die Reflexionsfläche des Reflektorschirms. Durch die Stütz- und Spannstruktur ist das tuchartige Reflexionselement gespannt, weist also - trotz der gekrümmten Form des Reflexionselementes im aufgespannten Zustand - eine im Wesentlichen glatte Struktur auf, so dass die Außenfläche und die Innenfläche, also insbesondere auch die Reflexionsfläche, im Wesentlichen faltenfrei sind. Der Nachteil solcher Reflektorschirme besteht nun darin, dass die Reflexionselemente aufgrund der guten Reflexionseigenschaften der Reflexionsfläche eine hohe Blendwirkung aufweisen. Einfach ausgedrückt ist es mit ungeschütztem Auge kaum möglich, in einen im Einsatz befindlichen, also von mindestens einem Leuchtmittel angestrahlten, Reflektorschirm zu schauen, ohne die Augen zusammenzukneifen oder gar zu schließen. Häufig führt das Hineinschauen in einen angestrahlten Reflektorschirm sogar zum Tränen der Augen, was insbesondere bei Aufnahmen von Personen höchst unerwünscht ist.

Der Erfindung liegt somit die Aufgabe zugrunde, einen Reflektorschirm mit verbesserten Reflexions- und insbesondere Blendeigenschaften zur Verfügung zu stellen. Die Aufgabe besteht weiterhin darin, eine entsprechende Reflektoranordnung vorzuschlagen.

Diese Aufgabe wird durch einen Reflektorschirm der eingangs genannten Art dadurch gelöst, dass das tuchartige Reflexionselement in aufgespanntem Zustand zur Bildung einer unebenen Reflexionsfläche mindestens teilweise gerafft ausgebildet ist. Durch die Formgebung des Reflektorschirms als rotationssymmetrischer Körper mit kegelförmigem Querschnitt ist grundsätzlich eine gewölbte Reflexionsfläche gegeben. Die erfindungsgemäße Ausführung bezieht sich jedoch nicht auf die äußere Form des Reflexionselementes, sondern auf die Oberflächen des Reflexionselementes an sich, die durch die Raffung mit Bergen und Tälern versehen sind. Durch die Raffung wird die gewölbte, ursprünglich aber in der Oberfläche glatte Reflexionsfläche quasi aufgebrochen bzw. künstlich mit Falten oder dergleichen versehen, die dafür sorgen, dass eine Streuung des Lichts mit entsprechender Diffusionswirkung erfolgt. Zum einen ist damit die Blendwirkung deutlich reduziert, so dass das Hineinschauen in den im Einsatz befindlichen Reflektorschirm ohne Beeinträchtigung, also z.B. Blinzeln oder Schließen oder Tränen der Augen, ermöglicht wird, was zum Beispiel bei Portraitaufnahmen von hoher Bedeutung ist. Zum anderen wird durch diese erfindungsgemäße Ausführung ein (Streu-)Licht erzeugt, das optimierte Bildcharakteristika ermöglicht und scharfe Schatten vermeidet und insbesondere schattenarme oder schattenfreie Aufnahmen ermöglicht.

In einer erfindungsmäßigen Ausführungsform sind mindestens einige der Schirmsegmente mindestens teilweise gerafft ausgebildet. Beispielsweise kann nur jedes zweite Schirmsegment gerafft ausgebildet sein. Die mit einer Raffung versehenen Schirmsegmente können nur abschnittsweise, z.B. im Randbereich der Lichtaustrittsöffnung, oder vollständig gerafft ausgebildet sein. Letztlich können einzelne Schirmsegmente auch mit unterschiedlichen Raffmustern, also z.B. abwechselnd mit einer leichten Raffung (zur Bildung leichter Unebenheiten) und einer starken Raffung (zur Bildung großer Unebenheiten), versehen sein.

In einer besonders vorteilhaften Weiterbildung ist jedes zwischen zwei Spannspeichen liegende Schirmsegment im Wesentlichen über die gesamte Fläche gerafft ausgebildet. Mit dieser Ausführungsform wird eine besonders gute und gleichmäßige Blendreduzierung erreicht, bei gleichzeitig verbesserter Bildcharakteristik, insbesondere bezogen auf die Schattenreduzierung.

Zweckmäßigerweise sind dem oder jedem Schirmsegment Mittel zum Raffen des Reflexionselementes zugeordnet. Diese mechanischen Raffmittel können z.B. Klammern, Spangen, Spanngummis, Spannfäden oder andere eine Raffung erzeugende Komponenten sein. Die Raffmittel können integraler Bestandteil des Reflektorschirms sein oder als separate Komponenten fest und/oder lösbar mit diesem verbunden sein.

Erfindungsgemäß weist das oder jedes Schirmsegment beabstandet zu den Spannspeichen mindestens eine Naht auf. Die oder jede Raffnaht, die zusätzlich zu den Nähten ausgebildet ist, in deren Bereich die außenliegenden Spannspeichen angeordnet sind, stellt ein besonders einfach und günstig herzustellendes Raffmittel dar, das die Faltfunktion des Reflektorschirms nicht beeinträchtigt. Es können in jedem Schirmsegment eine Raffnaht oder mehrere Raffnähte vorgesehen sein. Die Raffnähte können bezüglich ihrer Länge und Ausrichtung variieren, also z.B. schräg oder quer zu den Spannspeichen verlaufen oder sich kreuzen.

Besonders vorteilhaft verläuft die oder jede Naht in jedem Schirmsegment mittig zwischen den Spannspeichen. Das bedeutet, dass die Raffnähte ausgehend vom freien Rand des Reflektorschirms an der Lichtaustrittsöffnung in Richtung des gedachten Scheitelpunkts verlaufen, jeweils mit gleichem Abstand zu den beiden benachbarten Nähten der Spannspeichen, wobei der Abstand der Raffnaht zu den benachbarten Nähten der Spannspeichen in Richtung des Scheitelpunktes jeweils abnimmt. Die Raffnaht kann etwa bis zum Scheitelpunkt S verlaufen. Die oder jede Raffnaht kann aber auch in einem Abstand zum Scheitelpunkt enden. Die Raffnaht kann in das Reflexionselement eingebracht/eingenäht werden. Es besteht auch die Möglichkeit, dass jedes Schirmsegment mittig zwischen zwei Spannspeichen getrennt und wieder zusammengenäht ist, wodurch sich durch die Verkürzung des Materials des Reflexionselementes eine Raffstruktur ergibt.

Erfindungsgemäß ist im Bereich jeder Naht eine Saumtasche ausgebildet, in die mindestens eine Raffspeiche eingesetzt ist. Die Saumtasche zu jeder Raffnaht ist vorzugsweise außenliegend angeordnet. Die oder jede Raffspeiche kann direkt und vollständig in die Saumtasche eingenäht sein. Die Saumtasche kann aber auch eine oder mehrere Öffnungen aufweisen, durch die die oder jede Raffspeiche einschiebbar ist. Durch die Raffspeichen wird einerseits die Stütz- und Spannstruktur des Reflektorschirms für eine formstabilen Reflektorschirm unterstützt. Andererseits verstärken die Raffspeichen die Raffstruktur und halten diese in Form.

Vorteilhafterweise ist jede Raffspeiche aus einem biegsamen Material, vorzugsweise einem glasfaserverstärkten Kunststoff, hergestellt. Durch das biegsame Material der Raffspeichen lassen sich diese zum einen leicht montieren und gewährleisten zum anderen eine Formstabilität des Reflexionselementes sowie der Raffstruktur. Selbstverständlich sind auch Raffspeichen aus anderen Materialien, wie z.B. Metallen, einsetzbar.

In einer optionalen Weiterbildung der Raffspeichen weist jede Raffspeiche mindestens abschnittsweise eine strukturierte Oberfläche auf. Die Oberfläche kann angeraut oder mit Vorsprüngen oder dergleichen versehen sein. Durch die strukturierte Oberfläche der Raffspeichen kann die Bildung der Raffstruktur insbesondere beim Einschieben der Raffspeichen in die Saumtaschen unterstützt oder sogar verstärkt werden, indem sich die Oberflächenstruktur mit dem Material/Stoff des Reflexionselementes bzw. der Saumtasche "verhakt", wodurch das Material/der Stoff beim Einschieben der Raffspeichen zusammengeschoben wird und entsprechend Falten wirft. Die Raffspeichen, die vorzugsweise im Querschnitt rund ausgebildet sind, andere Querschnittsformen sind aber ebenfalls möglich, können aber auch eine glatte Oberfläche aufweisen.

Vorteilhafterweise besteht das Reflexionselement aus einem einstückigen Zuschnitt und die Schirmsegmente werden durch Nähte eingeteilt, wobei die Spannspeichen mindestens teilweise in außenliegenden, entlang der Nähte verlaufenden Saumtaschen geführt sind. Das Reflexionselement kann aber auch aus mehreren Zuschnitten gebildet sein.

Eine besonders bevorzugte Weiterbildung zeichnet sich dadurch aus, dass die Stütz- und Spannstruktur vierundzwanzig Spannspeichen umfasst, die gleichmäßig über den Umfang des aufgespannten Reflektorschirms zur Bildung von vierundzwanzig Schirmsegmenten verteilt angeordnet sind. Vorzugsweise sind die vierundzwanzig Schirmsegmente durch Raffmittel bildende Raffnähte (mit oder ohne Raffspeiche) geteilt, derart, dass achtundvierzig gleiche Schirmteilsegmente gebildet sind. Die Anzahl der Spannspeichen kann variieren. Entsprechend kann auch die Anzahl der Schirmsegmente variieren.

Eine vorteilhafte Ausführungsform ist dadurch gekennzeichnet, dass das tuchartige Reflexionselement aus einem Trägerstoff besteht, auf den in einer die Reflexionsfläche bildenden Innenseite eine mit Aluminium bedampfte Kunststofffolie kaschiert ist. Andere Ausführungen des Reflexionselementes, insbesondere hinsichtlich der Auswahl des Materials des Trägerstoffes und der Ausbildung der Reflexionsfläche sind aber ebenfalls möglich.

Die Aufgabe wird auch durch eine Reflektoranordnung der eingangs genannten Art dadurch gelöst, dass der Reflektorschirm nach einem oder mehreren der Ansprüche 1 bis 13 ausgebildet und eingerichtet ist. Die sich daraus ergebenden Vorteile wurden bereits im Zusammenhang mit dem Reflektorschirm beschrieben, weshalb zur Vermeidung von Wiederholungen auf die entsprechenden Passagen verwiesen wird.

Weitere zweckmäßige und/oder vorteilhafte Merkmale und Weiterbildungen zum Reflektorschirm und zur Reflektoranordnung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung einer bevorzugten Ausführungsform eines erfindungsgemäßen Reflektorschirms in Seitenansicht,
- Fig. 2: den Reflektorschirm gemäß Figur 1 mit eingesetztem Trägerelement in Rückansicht,
- Fig. 3: den Reflektorschirm gemäß Figur 1 in Vorderansicht in die Lichtaustrittsöffnung hinein,
- Fig. 4: einen vergrößerten Ausschnitt der Reflexionsfläche des Reflektorschirms gemäß Figur 1, und
- Fig. 5: eine Reflektoranordnung mit einem Reflektorschirm (im Teilschnitt) in perspektivischer Ansicht.
Der in der Zeichnung dargestellte Reflektorschirm ist zum Einsatz für Foto- und Filmaufnahmen ausgebildet und eingerichtet. Der Reflektorschirm kann aber auch als einfacher Lampenschirm eingesetzt werden und die technischen Vorteile erzielen.

Die Erfindung betrifft einen faltbaren Reflektorschirm 10, umfassend ein flexibles, tuchartiges Reflexionselement 11 mit einer außenliegenden Stütz- und Spannstruktur 12, die mehrere Spannspeichen 13 umfasst, die vorzugsweise gleichmäßig über den Umfang verteilt angeordnet sind und das Reflexionselement 11 in eine im Wesentlichen der Anzahl der Spannspeichen 13 entsprechende Anzahl von Schirmsegmenten 14 einteilen, wobei das aus der Anzahl von Schirmsegmenten 14 bestehende Reflexionselement 11 in aufgespanntem Zustand des Reflektorschirms 10 einen im Wesentlichen rotationssymmetrischen Körper 15 mit einer Lichtaustrittsöffnung 16 bildet. Der aus einem Kunstmaterial oder Naturmaterial oder einer Materialmischung daraus bestehende Trägerstoff für das Reflexionselement 11 ist in aufgefaltetem Zustand durch die Spannspeichen 13 als Bestandteil der Stütz- und Spannstruktur 12 unter Spannung gehalten. Dabei verlaufen die Spannspeichen 13 ausgehend von einem imaginären Scheitelpunkt S des aufgefalteten Reflektorschirms 10 fächerartig bzw. strahlenförmig in Richtung der Lichtaustrittsöffnung 16. Im Bereich des Scheitelpunktes S sind die Spannspeichen 13 an einem Stütz- bzw. Spannring 17 fixiert. Dieser Stütz- bzw. Spannring 17 weist eine Durchgangsöffnung 18 auf, die zum Durchführen/Einführen eines Leuchtmittels, eines Trägerelementes oder dergleichen ausgebildet und eingerichtet ist (hierzu weiter unten). Die Spannspeichen 13 können am freien Rand der Lichtaustrittsöffnung 14 enden oder über diesen hinausragen. Die Spannspeichen 13 unterteilen das Reflexionselement 11 in die Schirmsegmente 14, so dass ein Schirmsegment 14 stets von zwei Spannspeichen 13 begrenzt bzw. eingefasst wird.

Dieser Reflektorschirm 10 zeichnet sich erfindungsgemäß dadurch aus, dass das tuchartige Reflexionselement 11 in aufgespanntem Zustand zur Bildung einer unebenen Reflexionsfläche 19 mindestens teilweise gerafft ausgebildet ist. Letztlich kann die teilweise oder vollständige Raffung, also das Schaffen einer mindestens teilweise unebenen Reflexionsfläche 19, ohne zusätzliche Hilfsmittel, beispielsweise durch das Erzeugen von Verspannungen im Reflexionselement 11 oder dergleichen, oder durch separate Mittel oder durch Mittel, die integraler Bestandteil des Reflektorschirms sind, erzeugt werden. Es besteht die Möglichkeit, dass das Reflexionselement 11 insgesamt eine Raffung aufweist. In anderen Ausführungen, beispielsweise bei einem mehrlagigen Aufbau des Reflexionselementes 11, kann auch nur die die Reflexionsfläche 19 bildende, nach innen weisende Schicht des Reflexionselementes 11 eine Raffung aufweisen.

Die im Folgenden beschriebenen Merkmale und Weiterbildungen stellen für sich betrachtet oder in Kombination miteinander bevorzugte Ausführungsformen des Reflektorschirms 10 dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig den weiter oben beschriebenen Reflektorschirm 10 weiterbilden können.

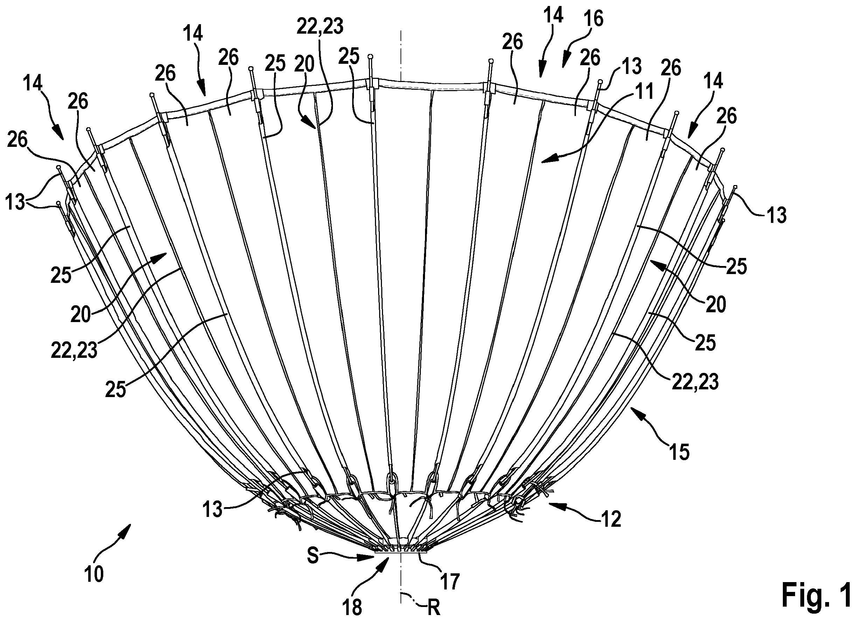

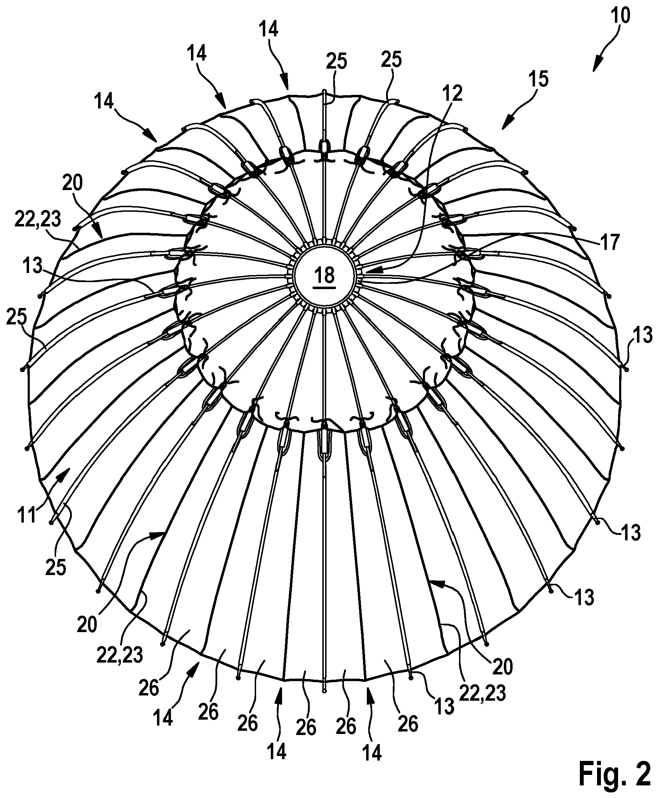

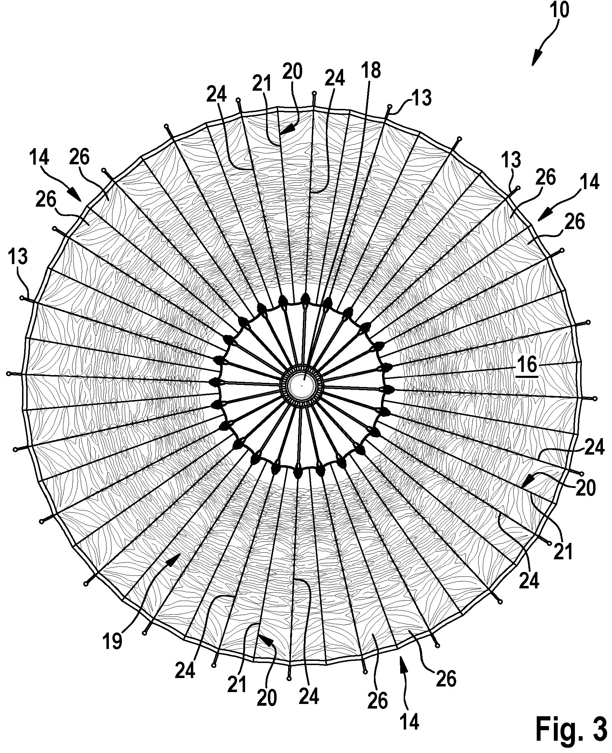

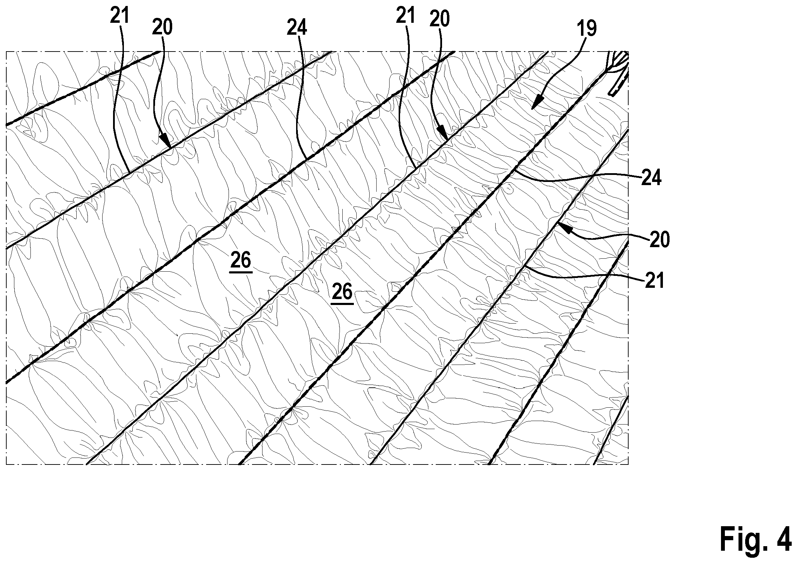

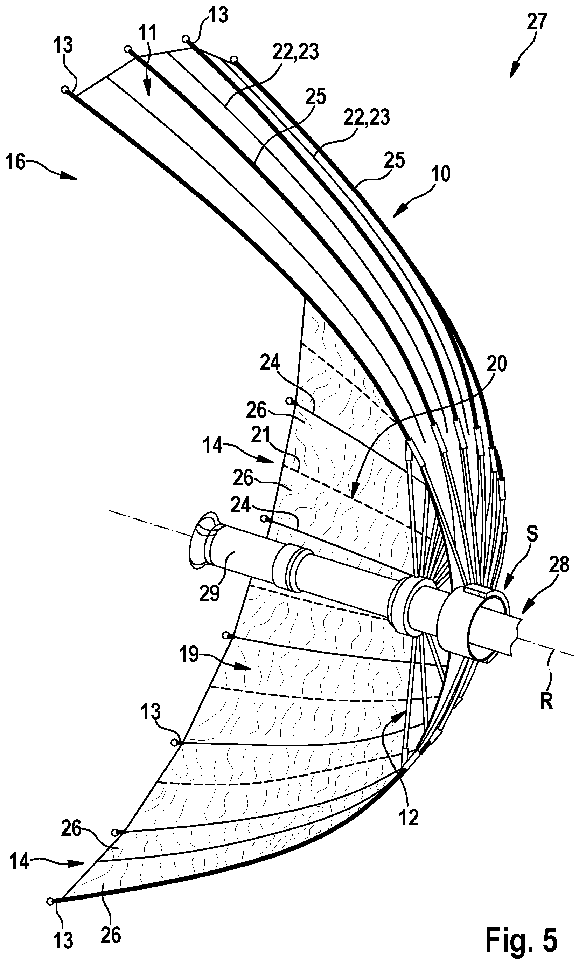

Im dargestellten Ausführungsbeispiel gemäß der Figuren 1 bis 5 sind alle Schirmsegmente 14 gleichmäßig gerafft ausgebildet. Besonders bevorzugt ist jedes zwischen zwei Spannspeichen 13 liegende Schirmsegment 14 im Wesentlichen über die gesamte Fläche gerafft ausgebildet. Optional und bevorzugt ist die Reflexionsfläche 19 um die Durchgangsöffnung 18 herum frei von einer Raffung. In den Figuren 2 und 3 ist besonders gut zu erkennen, dass die Raffung beabstandet zum Scheitelpunkt S endet. In anderen Ausführungsformen können auch nur einzelne Schirmsegmente 14 ganz oder teilweise gerafft ausgebildet sein.

Wie bereits erwähnt, kann die Raffung der Reflexionsfläche 19 ohne Hilfsmittel gebildet sein. Vorzugsweise sind dem Reflexionselement 11 bzw. dem oder jedem Schirmsegment 14, das eine Raffung aufweist, jedoch Mittel 20 zum Raffen des Reflexionselementes 11 zugeordnet. Die Mittel 20 zum Raffen können Spangen, Klemmen, Spanngummis, Spannfäden oder dergleichen sein. Erfindungsgemäß und in der Zeichnung dargestellt bilden Nähte 21 die Mittel 20 zum Raffen. Die Nähte 21 können auf das Reflexionselement 11 aufgesetzt sein. Die Nähte 21 können aber auch durch Auftrennen des Reflexionselementes 11 und Zusammennähen der Trennstellen gebildet sein. In den Figuren ist in jedem Schirmsegment 14 eine durchgängige Naht 21 ausgebildet. Diese Naht 21 ist gleichmäßig beabstandet zu den Spannspeichen 13 ausgerichtet und verläuft entsprechend mittig zwischen den Spannspeichen 13. In anderen Ausführungsformen können die Nähte 21 auch unterbrochen sein und/oder andere Ausrichtungen aufweisen und/oder abweichende Positionen einnehmen.

Die Nähte 21 können für sich betrachtet das Mittel 20 zum Raffen des Reflexionselementes 11 bilden. Erfindungsgemäß ist im Bereich jeder Naht 21 eine Saumtasche 22 ausgebildet, in die mindestens eine Raffspeiche 23 eingesetzt ist. Die Saumtasche 22 verläuft vorzugsweise entlang der Naht 21 oder kann diese sogar bilden. Die Saumtaschen 22 können alternativ aber auch einen von der Naht 21 abweichenden Verlauf aufweisen. Die Saumtaschen 22 können vollständig geschlossen sein. Vorzugsweise weisen die Saumtaschen 22 jedoch mindestens eine Öffnung auf, durch die die Raffspeiche 23 einsteckbar ist.

Die oder jede Raffspeiche 23 ist aus einem biegsamen Material, vorzugsweise einem glasfaserverstärkten Kunststoff, hergestellt. Die vorzugsweise stabförmigen Raffspeichen 23 weisen üblicherweise einen runden Querschnitt auf und sind mit einer glatten Oberfläche versehen. Optional weist jede Raffspeiche 23 mindestens abschnittsweise eine strukturierte Oberfläche auf, z.B. zur Bildung feiner Widerhaken oder dergleichen, die mit dem Material der Saumtasche 22 in Eingriff bringbar sind und stehen. Der Querschnitt der Raffspeichen 23 kann variieren und beispielsweise rechteckig, oval oder anderweitig geformt sein.

Das Reflexionselement 11 selbst besteht vorzugsweise aus einem einstückigen Zuschnitt. Die Schirmsegmente 14 werden bevorzugt durch Nähte 24 eingeteilt bzw. unterteilt. Die außenliegenden Spannspeichen 13 sind mindestens teilweise in entlang der Nähte 24 verlaufenden Saumtaschen 25 geführt. Die Nähte 24 können auch durch die Saumtaschen 25 gebildet sein. Die Saumtaschen 25 weisen vorzugsweise eine Öffnung zum Einführen der Spannspeichen 13 auf.

Im konkreten und besonders bevorzugten Ausführungsbeispiel gemäß der Zeichnung umfasst die Stütz- und Spannstruktur 12 vierundzwanzig Spannspeichen 13, die gleichmäßig über den Umfang des aufgespannten Reflektorschirms 10 zur Bildung von vierundzwanzig Schirmsegmenten 14 verteilt angeordnet sind. Die vierundzwanzig Schirmsegmente 14 sind durch Raffmittel bildende Nähte 21 geteilt, derart, dass achtundvierzig gleiche Schirmteilsegmente 26 gebildet sind. Die Anzahl der Spannspeichen 13 und damit der Schirmsegmente 14 kann variieren. Die Anzahl der Spannspeichen 13 kann letztlich auch von der Anzahl der Schirmsegmente 14 abweichen. Die Verteilung der Spannspeichen 13 um den Umfang herum kann auch unregelmäßig sein.

Das tuchartige Reflexionselement 11 besteht aus einem Trägerstoff, auf den in einer die Reflexionsfläche 19 bildenden Innenseite eine mit Aluminium bedampfte Kunststofffolie kaschiert ist. Der Trägerstoff kann ein- oder mehrlagig ausgebildet sein. Der Aufbau des Trägerstoffes kann variieren, ebenso wie die Ausbildung der Reflexionsfläche 19.

Der zuvor beschriebene Reflektorschirm 10 kann als Einzelteil eingesetzt werden. Bevorzugt ist der Reflektorschirm 10 jedoch Bestandteil einer Reflektoranordnung 27, die einen Reflektorschirm 10 sowie ein Trägerelement 28 mit mindestens einem Leuchtmittel 29 umfasst. Der Reflektorschirm 10 ist erfindungsgemäß nach einem oder mehreren der Ansprüche 1 bis 13 ausgebildet und eingerichtet. Das Trägerelement 28 ist durch die Durchgangsöffnung 18 geführt, so dass der Reflektorschirm 10 auf dem Trägerelement 28 sitzt.

## Patentansprüche

1. Faltbarer Reflektorschirm (10), umfassend ein flexibles, tuchartiges Reflexionselement (11) mit einer außenliegenden Stütz- und Spannstruktur (12), die mehrere Spannspeichen (13) umfasst, die vorzugsweise gleichmäßig über den Umfang verteilt angeordnet sind und das Reflexionselement (11) in eine im Wesentlichen der Anzahl der Spannspeichen (13) entsprechende Anzahl von Schirmsegmenten (14) einteilen, wobei das aus der Anzahl von Schirmsegmenten (14) bestehende Reflexionselement (11) in aufgespanntem Zustand des Reflektorschirms (11) einen im Wesentlichen rotationssymmetrischen Körper (15) mit einer Lichtaustrittsöffnung (16) bildet, wobei das tuchartige Reflexionselement (11) in aufgespanntem Zustand zur Bildung einer unebenen Reflexionsfläche (19) mindestens teilweise gerafft ausgebildet ist, und wobei das oder jedes Schirmsegment (14) beabstandet zu den Spannspeichen (13) mindestens eine Naht (21) aufweist, **dadurch gekennzeichnet, dass** im Bereich jeder Naht (21) eine Saumtasche (22) ausgebildet ist, in die mindestens eine Raffspeiche (23) eingesetzt ist.

2. Reflektorschirm (10) nach Anspruch 1, **dadurch gekennzeichnet, dass** mindestens einige der Schirmsegmente (14) mindestens teilweise gerafft ausgebildet sind.

3. Reflektorschirm (10) nach Anspruch 1 oder 2, **dadurch gekennzeichnet, dass** jedes zwischen zwei Spannspeichen (13) liegende Schirmsegment (14) im Wesentlichen über die gesamte Fläche gerafft ausgebildet ist.

4. Reflektorschirm (10) nach einem oder mehreren der Ansprüche 1 bis 3, **dadurch gekennzeichnet, dass** dem oder jedem Schirmsegment (14) Mittel (20) zum Raffen des Reflexionselementes (11) zugeordnet sind.

5. Reflektorschirm (10) nach Anspruch 1, **dadurch gekennzeichnet, dass** die oder jede Naht (21) in jedem Schirmsegment (14) mittig zwischen den Spannspeichen (13) verläuft.

6. Reflektorschirm (10) nach Anspruch 1, **dadurch gekennzeichnet, dass** jede Raffspeiche (23) aus einem biegsamen Material, vorzugsweise einem glasfaserverstärkten Kunststoff, hergestellt ist.

7. Reflektorschirm (10) nach Anspruch 6, **dadurch gekennzeichnet, dass** jede Raffspeiche (23) mindestens abschnittsweise eine strukturierte Oberfläche aufweist.

8. Reflektorschirm (10) nach einem oder mehrere der Ansprüche 1 bis 7, **dadurch gekennzeichnet, dass** das Reflexionselement (11) aus einem einstückigen Zuschnitt besteht und die Schirmsegmente (14) durch Nähte (24) eingeteilt werden, wobei die Spannspeichen (13) mindestens teilweise in außenliegenden, entlang der Nähte (24) verlaufenden Saumtaschen (25) geführt sind.

9. Reflektorschirm (10) nach einem oder mehreren der Ansprüche 1 bis 8, **dadurch gekennzeichnet, dass** die Stütz- und Spannstruktur (12) vierundzwanzig Spannspeichen (13) umfasst, die gleichmäßig über den Umfang des aufgespannten Reflektorschirms (10) zur Bildung von vierundzwanzig Schirmsegmenten (14) verteilt angeordnet sind.

10. Reflektorschirm (10) nach Anspruch 9, **dadurch gekennzeichnet, dass** die vierundzwanzig Schirmsegmente (14) durch Raffmittel (20) bildende Nähte (21) geteilt sind, derart, dass achtundvierzig gleiche Schirmteilsegmente (26) gebildet sind.

11. Reflektorschirm (10) nach einem oder mehreren der Ansprüche 1 bis 10, **dadurch gekennzeichnet, dass** das tuchartige Reflexionselement (11) aus einem Trägerstoff besteht, auf den in einer die Reflexionsfläche (19) bildenden Innenseite eine mit Aluminium bedampfte Kunststofffolie kaschiert ist.

12. Reflektoranordnung (27), umfassend einen Reflektorschirm (10) sowie ein Trägerelement (28) mit mindestens einem Leuchtmittel (29), **dadurch gekennzeichnet, dass** der Reflektorschirm (10) nach einem oder mehreren der Ansprüche 1 bis 11 ausgebildet und eingerichtet ist.

## Claims

1. Foldable reflector umbrella (10) comprising a flexible, cloth-like reflective element (11) with an outer supporting and tensioning structure (12) composed of a plurality of tensioning spokes (13) which are preferably distributed evenly over the expanse and divide the reflective element (11) into a number of umbrella segments (14) corresponding substantially to the number of tensioning spokes (13), wherein, with the reflector umbrella (10) in the opened state, the reflective element (11) consisting of the number of umbrella segments (14) forms a substantially rotationally symmetrical body (15) with a light exit opening (16), wherein the cloth-like reflective element (11) in the opened state is at least partially gathered so as to form an uneven reflection surface (19), and wherein the or each umbrella segment (14) has at least one seam (21) spaced from the tensioning spokes (13), **characterised in that** a hem pocket (22) is formed in the area of each seam (21), into which at least one gathering spoke (23) is inserted.

2. Reflector umbrella (10) according to claim 1, **characterised in that** at least some of the umbrella segments (14) are at least partially gathered.

3. Reflector umbrella (10) according to claim 1 or 2, **characterised in that** each umbrella segment (14) lying between two tensioning spokes (13) is designed to be gathered over essentially the entire surface.

4. Reflector umbrella (10) according to one or more of claims 1 to 3, **characterised in that** means (20) for gathering the reflective element (11) are associated with the or each umbrella segment (14).

5. Reflector umbrella (10) according to claim 1, **characterised in that** the or each seam (21) in each umbrella segment (14) runs centrally between the tensioning spokes (13).

6. Reflector umbrella (10) according to claim 1, **characterised in that** each gathering spoke (23) is made of a flexible material, preferably a glass fibre reinforced plastic.

7. Reflector umbrella (10) according to claim 6, **characterised in that** at least portions of each gathering spoke (23) have a textured surface.

8. Reflector umbrella (10) according to one or more of claims 1 to 7, **characterized in that** the reflective element (11) consists of a one-piece blank and the umbrella segments (14) are divided by seams (24), the tensioning spokes (13) being at least partially led through outward-lying hem pockets (25) running along the seams (24).

9. Reflector umbrella (10) according to one or more of claims 1 to 8, **characterised in that** the supporting and tensioning structure (12) comprises twenty-four tensioning spokes (13) which are evenly distributed over the expanse of the opened reflector umbrella (10) to form twenty-four umbrella segments (14).

10. Reflector umbrella (10) according to claim 9, **characterised in that** the twenty-four umbrella segments (14) are divided by seams (21) forming gathering means (20), so as to create forty-eight equal umbrella sub-segments (26).

11. Reflector umbrella (10) according to one or more of claims 1 to 10, **characterised in that** the cloth-like reflective element (11) consists of a carrier material onto which an aluminium vapour-coated plastic film is applied on an inner side forming the reflective surface (19).

12. Reflector assembly (27) comprising a reflector umbrella (10) and a carrier element (28) with at least one light source (29), **characterised in that** the reflector umbrella (10) is configured and adapted according to one or more of claims 1 to 11.

## Revendications

1. Écran réflecteur pliable (10), comprenant un élément de réflexion flexible de type toile (11) avec une structure extérieure de soutien et de tension (12), qui comprend plusieurs rayons de tension (13), qui sont de préférence agencés en étant répartis uniformément sur la circonférence et qui divisent l'élément de réflexion (11) en un nombre de segments d'écran (14) correspondant essentiellement au nombre de rayons de tension (13), l'élément de réflexion (11) constitué du nombre de segments d'écran (14) formant, à l'état tendu de l'écran réflecteur (10), un corps (15) essentiellement à symétrie de révolution avec une ouverture de sortie de lumière (16), l'élément de réflexion de type toile (11) étant, à l'état tendu, configuré sous forme au moins partiellement froncée pour former une surface de réflexion (19) non plane, et le ou chaque segment d'écran (14) présentant, à distance des rayons de tension (13), au moins une couture (21), **caractérisé en ce que**, dans la zone de chaque couture (21), est configurée une poche d'ourlet (22) dans laquelle est inséré au moins un rayon de fronçage (23).

2. Écran réflecteur (10) selon la revendication 1, **caractérisé en ce qu'**au moins certains des segments d'écran (14) sont configurés sous forme au moins partiellement froncée.

3. Écran réflecteur (10) selon la revendication 1 ou 2, **caractérisé en ce que** chaque segment d'écran (14) situé entre deux rayons de tension (13) est configuré sous forme froncée essentiellement sur toute la surface.

4. Écran réflecteur (10) selon une ou plusieurs des revendications 1 à 3, **caractérisé en ce que** le ou chaque segment d'écran (14) est associé à des moyens (20) pour froncer l'élément de réflexion (11).

5. Écran réflecteur (10) selon la revendication 1, **caractérisé en ce que** la ou chaque couture (21) dans chaque segment d'écran (14) s'étend au centre entre les rayons de tension (13).

6. Écran réflecteur (10) selon la revendication 1, **caractérisé en ce que** chaque rayon de fronçage (23) est fabriqué dans un matériau souple, de préférence une matière plastique renforcée de fibres de verre.

7. Écran réflecteur (10) selon la revendication 6, **caractérisé en ce que** chaque rayon de fronçage (23) présente au moins par sections une surface structurée.

8. Écran réflecteur (10) selon une ou plusieurs des revendications 1 à 7, **caractérisé en ce que** l'élément de réflexion (11) est constitué d'une pièce découpée d'un seul tenant et les segments d'écran (14) sont divisés par des coutures (24), les rayons de tension (13) étant guidés au moins en partie dans des poches d'ourlet (25) extérieures, s'étendant le long des coutures (24).

9. Écran réflecteur (10) selon une ou plusieurs des revendications 1 à 8, **caractérisé en ce que** la structure de soutien et de tension (12) comprend vingt-quatre rayons de tension (13) qui sont agencés en étant répartis uniformément sur la circonférence de l'écran réflecteur tendu (10) pour former vingt-quatre segments d'écran (14).

10. Écran réflecteur (10) selon la revendication 9, **caractérisé en ce que** les vingt-quatre segments d'écran (14) sont divisés par des coutures (21) formant des moyens de fronçage (20), de manière à former quarante-huit sous-segments d'écran (26) identiques.

11. Écran réflecteur (10) selon une ou plusieurs des revendications 1 à 10, **caractérisé en ce que** l'élément de réflexion de type toile (11) est constitué d'une matière de support sur laquelle est contrecollé, dans un côté intérieur formant la surface de réflexion (19), un film en matière plastique vaporisé avec de l'aluminium.

12. Agencement réflecteur (27), comprenant un écran réflecteur (10) ainsi qu'un élément de support (28) avec au moins un moyen d'éclairage (29), **caractérisé en ce que** l'écran réflecteur (10) est configuré et adapté selon une ou
